Europäisches Patentamt

European Patent Office

Office européen des brevets

(19)

(11) **EP 0 505 536 B1**

(12) **EUROPÄISCHE PATENTSCHRIFT**

(45) Veröffentlichungstag und Bekanntmachung des Hinweises auf die Patenterteilung:
**17.04.1996 Patentblatt 1996/16**

(21) Anmeldenummer: **91917359.1**

(22) Anmeldetag: **01.10.1991**

(51) Int Cl.6: **G03B 27/73**

(86) Internationale Anmeldenummer:
**PCT/EP91/01878**

(87) Internationale Veröffentlichungsnummer:
**WO 92/06408 (16.04.1992 Gazette 1992/09)**

(54) **VERFAHREN UND VORRICHTUNG ZUR REGELUNG DER KOPIERLICHTMENGE IN FOTOGRAFISCHEN VERGRÖSSERUNGS- ODER KOPIERGERÄTEN**

PROCESS AND DEVICE FOR REGULATING THE AMOUNT OF COPYING LIGHT IN PHOTOGRAPHIC ENLARGERS OR PHOTOCOPIERS

PROCEDE ET DISPOSITIF DE REGLAGE DE LA QUANTITE DE LUMIERE DE REPRODUCTION DANS DES COPIEURS OU AGRANDISSEURS PHOTOGRAPHIQUES

(84) Benannte Vertragsstaaten:
**AT CH DE FR GB LI NL**

(30) Priorität: **04.10.1990 IT 484490**

(43) Veröffentlichungstag der Anmeldung:
**30.09.1992 Patentblatt 1992/40**

(73) Patentinhaber: **DURST PHOTOTECHNIK A.G.**
**I-39042 Brixen (IT)**

(72) Erfinder:
- **DELUEG, Verner**
  **I-39040 Vahrn (IT)**
- **VINATZER, Alex**
  **I-39042 Brixen (IT)**

(56) Entgegenhaltungen:
| | |
|---|---|
| EP-A- 0 154 722 | WO-A-86/00149 |
| DE-A- 3 515 608 | US-A- 4 319 834 |
| US-A- 4 371 259 | US-A- 5 032 866 |

## Beschreibung

Technisches Gebiet

Die vorliegende Erfindung bezieht sich allgemein auf das Gebiet der Farbbelichtung bei der Herstellung fotografischer Abzüge von einem Filmoriginal mit Hilfe eines Vergrößerungs- oder Kopiergerätes. Insbesondere betrifft die Erfindung ein Verfahren und eine Vorrichtung zur Regelung der Kopierlichtmenge bei der Farbbelichtung in fotografischen Farbkopiergeräten.

Stand der Technik

In bekannten Farbkopiergeräten ist das Kopierlicht in seiner Farbzusammensetzung einstellbar, um eventuelle farbliche Abweichungen, die sich im Filmmaterial während der Lagerung, bei der Belichtung oder der Entwicklung ergeben haben, auszugleichen oder in der Kopie farbliche Veränderungen entsprechend individuellen Erfordernissen herbeizuführen. Die Belichtung erfolgt mit einheitlicher Belicntungszeit für alle Farbschichten des Kopiermaterials.

Die notwendige Farbeinstellung des Kopierlichtes kann sowohl nach dem additiven als nach dem subtraktiven Farbmischverfahren erfolgen. Ein nach dem additiven Verfahren arbeitender Farblichtkopf eines vergrößerungsgerätes weist drei getrennte, in der Intensität regelbare Lichtquellen auf, wobei jeder Lichtquelle ein Farbfilter mit Durchlaßbereich in einer der Grundfarben Rot, Grün und Blau vorgesezt ist. Hingegen besitzt ein nach dem subtraktiven Verfahren arbeitender Farblichtkopf eine einzige, im wesentlichen weiße Lichtquelle, wobei zur Anfärbung des Lichtes drei subtraktive, je eine Grundfarbe sperrende Filter stufenlos in den Strahlengang einführbar sind.

Die Einstellbarkeit des Kopierlichtes in den drei Grundfarben verlangt eine Eichung des Systems. Nur so können definierte Einstellungen für mehrere Geräte Gültigkeit haben und Änderungen der Einstellung von unterschiedlichen Ausgangswerten aus dieselbe Wirkung erzeugen. Die Einheit dieser Eichung ist der sogenannte Filterwert.

Bei Farblichtköpfen mit rein mechanischer Filtereinstellung stimmt der auf der Filterskala angezeigte Wert mit dem tatsächlichen Filterwert nicht immer überein. Ursache hierfür können Zentrizitätsfehler der Lampenwendel in bezug auf den Reflektor, Durchmesser- und Formtoleranzen des Reflektors, Leistungs- und Temperaturunterschiede der Lampen, Nebendichten der Filter sowie Änderungen der spektralen Charakteristik von Reflektor und Filter durch Temperaturänderungen sein.

Um derartige Störeinflüsse zu reduzieren, wurden bereits Farblichtköpfe mit einem geschlossenen Lichtregelkreis (closed loop) entwickelt, in denen das von den Farbfiltern beeinflußte Licht von drei in den Farben Rot, Grün und Blau empfindlichen lichtelektrischen Sensoren gemessen und mit an einem Bedienpult einstellbaren Soll-Werten verglichen wird siehe z.B. US-A-4,319,834. In dem geschlossenen Regelkreis werden die Filter automatisch so lange verstellt, bis eine vorhandene Abweichung ausgeglichen ist. Auf diese Weise ergibt sich ein Kopierlicht, das in Farbe und Dichte mit den am Bedienpult eingestellten Werten übereinstimmt, zeitlich konstant bleibt und jederzeit reproduzierbar ist. Erfolgt die Regelung des Kopierlichtes ausschließlich mit Hilfe der subtraktiven Farbfilter, müssen diese schon in ihrer Ausgangsstellung teilweise im Strahlengang liegen, um einer eventuellen Lichtverminderung, die durch Nebendichten der Filter, Alterung der Lampe oder auf andere Weise entsteht, mit dem Ausfahren eines oder mehrerer Filter aus dem Strahlengang entgegenwirken zu können. Insbesondere müssen für eine Änderung der Neutraldichte, d. h. der Helligkeit bei gleichbleibender Farbzusammensetzung, alle crei Filter gemeinsam verstellt werden. Außer einem systematischen Lichtverlust bedeutet dies auch eine Reduzierung des wirksamen Einstellbereiches der Farbfilterung.

Bei einer anderen bekannten Vorgangsweise (z.B. DE-A-35 15 608) ist die Filtersteuerung so ausgelegt, daß sich nie alle drei Filter gleichzeitig im Strahlengang befinden. Neutraldichtewerte werden hier durch Regeln der Lichtintensität durch Verändern der Lampenspannung eingestellt. Die Neutraldichte entspricht dann der Differenz zwischen Soll- und Meßwert in der Farbe jenes Filters, das auf Null steht, d. h. außerhalb des Strahlenganges liegt. Nachteilig ist dabei, daß eine veränderliche Lampenspannung einen höheren Verschleiß der Lampe mit sich bringt und außerdem Veränderungen der Farbtemperatur des abgestrahlten Lichtes verursacht, die durch eine andere Filterstellung wieder ausgeglichen werden müssen. Ein solcher Augleich ist aber infolge der unvollkommenen Anpassung der Meßsonden an die spektrale Empfindlichkeit des Kopiermaterials stets unvollständig.

Ein in der Praxis häufig angewandtes weiteres Verfahren sieht für die Regelung der Neutraldichte eine einstellbare Dichteblende zusätzlich zu den Farbfiltern vor. Bei dieser Art der Regelung der Lichtintensität wird die Farbtemperatur der Lampe nicht beeinflußt und die diesbezüglichen Probleme entfallen. Bestehen bleibt jedoch die unvollständige Nutzung des verfügbaren Lichtstromes, weil auch die Dichteblende bereits in ihrer Ausgangsstellung teilweise wirksam sein muß, um eine Änderung der Lichtintensität sowohl in Richtung einer Zunahme als auch in Richtung einer Abnahme zu ermöglichen.

Offenbarung der Erfindung

Der Erfindung liegt die Aufgabe zugrunde, ein Verfahren und eine Vorrichtung zur Regelung der Kopierlichtmenge anzugeben, welche die aufgezeigten Nachteile der bekannten Verfahren vermeiden und insbesondere eine bessere Nutzung des verfügbaren Lichtstromes mit dem Ziel einer Verkürzung der erreichbaren Belichtungszeiten erlauben.

Nach dem erfindungsgemäßen Verfahren, das diese Aufgabe löst, wird das von den Farbfiltern beeinflußte licht des Vergrößerungsgerätes selektiv in den Grundfarben Rot, Grün und Blau gemessen und in einem geschlossenem Regelkreis mit Soll-Werten verglichen, wobei eine aus dem Vergleich der Ist-Werte mit vorgegebenen Soll-Werten resultierende Abweichung in Farbabweichung und Helligkeitsabweichung getrennt wird: die Farbabweichung wird durch Regelung der Farbfilter ausgeglichen, während die Helligkeitsabweichung in einen Korrekturfaktor für die Belichtungszeit umgesetzt wird, derart, daß für jede Grundfarbe das Produkt aus dem Ist-Wert der Lichtintensität und der effektiven Belichtungszeit konstant und gleich dem Produkt aus dem Soll-Wert der Lichtintensität und der vorgegebenen Nennbelichtungszeit ist.

In dem erfindungsgemäßen Verfahren erfaßt also der Regelkreis nicht nur die Intensität des Kopierlichtes, um Farb- und Helligkeitsabweichungen auszuregeln, sondern die Lichtmenge als Produkt aus Lichtintensität $(I_{y,m,c})$ und Belichtungszeit (ET) ist in die Regelung einbezogen. Jede Änderung der Neutraldichte wird über den in die Belichtungszeit einfließenden Korrekturfaktor durch eine entsprechende Belichtungszeitänderung kompensiert. Die effektive Belichtungszeit weicht aann von der vorgegebenen Nennbelichtungszeit ab.

Auf diese Weise kann auf eine zusätzliche Blende zur Regelung der Neutraldichte verzichtet werden. Damit entfällt der Lichtverlust, den eine solche Blende unausweichlich mit sich bringt, und die volle Nutzung des verfügbaren Lichtes führt generell zu kürzeren Belichtungszeiten. Der Wegfall der Blende bedeutet außerdem ein Kostenersparnis, weil die diesbezüglichen mechanischen Teile und die zugehörige Steuereinrichtung entfallen. Vorteilhafterweise wird die Differenz zwischen der errechneten effektiven Belichtungszeit und der ursprünglich eingestellten Nennbelichtungszeit auf einer Anzeigevorrichtung angezeigt. Soll mit im wesentlichen gleichbleibender Belichtungszeit gearbeitet werden, kann eine größere Abweichung der effektiven Belichtungszeit vom Nennwert mit Hilfe der Objektivblende kompensiert werden.

Die Regelung erfolgt In sich wiederholenden Regelzyklen auch während der Belichtung. Über die Dauer der Belichtung wird die effektive Belichtungszeit bei jedem Regelzyklus entsprechend dem Mittelwert der Korrekturfaktoren aus der Folge der seit Belichtungsbeginn abgelaufenen Zyklen aktualisiert.

Weitere Merkmale und Vorteile des erfingungsgemäßen Verfahrens und der Vorrichtung zur Durchführung desselben ergeben sich aus den abhängigen Ansprüchen in Verbindung mit der nachfolgenden Beschreibung eines bevorzugten Ausführungsbeispiels und den beigefügten Zeichnungen.

## Kurze Beschreibung der Zeichnungen

Figur 1 ist eine schematische Darstellung eines Vergrößerungsgerätes, in dem die Erfindung zur Anwendung kommt;

Figur 2 ist ein Blockdiagramm zur Erläuterung des Funktionsprinzips des geschlossenen Regelkreises im Vergrößerungsgerät nach Fig. 1;

Figur 3 ist ein Flußdiagramm des Regelkreises nach Fig. 2

## Bester Weg zur Ausführung der Erfindung

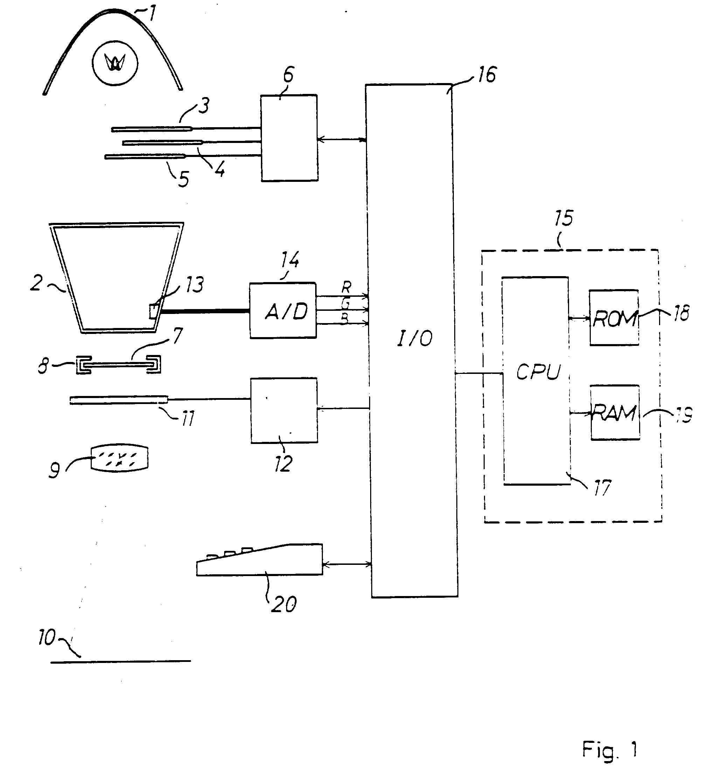

In Fig. 1 ist mit der Bezugszahl 1 eine Lichtquelle bezeichnet, die im wesentlichen weißes Licht in Richtung einer Lichtmischbox 2 abstrahlt. Zwischen Lichtquelle und Mischbox sind drei Farbfilter 3, 4 und 5 in den Komplementärfarben Cyan, Magenta und Gelb angeordnet. Über einen Filterantrieb 6 ist jedes Filter unabhängig von den anderen stufenlos in den Strahlengang einführbar und verursacht, je nach Einfuhrtiefe, eine mehr oder weniger starke Anfärbung des ursprünglich im wesentlichen weißen Lichtes. Das so angefärbte, aus der Mischbox diffus austretende Licht durchscheint eine zu kopierende Vorlage 7, die in einer Bildbühne 8 gehalten ist und von einem Objektiv 9 auf das Kopiermaterial 10 abgebildet wird, wo ein latentes Bild der Vorlage 7 entsteht. Im Bereich zwischen Objektiv und Vorlage ist ein Verschluß 11 angeordnet, der über einen Antrieb 12 betätigt wird.

Im Innern der Mischbox 2 sind im Bereich des farblich homogenen Lichtes fotoelektische Sensoren 13 angeordnet, die mittels vorgesetzter Farbfilter selektiv auf die Farben Rot, Grün und Blau ansprechen. Die von den Sensoren 13 gelieferten elektrischen Farbsignale werden einem Analog/Digitalwandler 14 zugeführt und in digitale Signale umgesetzt, die über eine I/0-Schnittstelle 16 einem Mikroprozessorsystem 15 zugeführt werden.

Das an sich bekannte Mikroprozessor-System umfaßt die I/0-Schnittstelle 16, eine zentrale Prozessoreinheit (CPU) 17, einen vorzugsweise programmierbaren Lesespeicher (ROM) 18 sowie einen Speicher mit freiem Zugriff (RAM) 19. Mit dem Mikroprozessorsystem 15 ist weiters über die I/0-Schnittstelle 16 eine als Bedienpult ausgebildete Eingabe- und Anzeigevorrichtung 20 verbunden, über welche Daten oder Befehle in das System eingegeben bzw. Betriebsdaten sichtbar angezeigt werden.

Das Mikroprozessorsystem steuert den Filterantrieb 6 und den Verschlußantrieb 12. Die Filter werden von Schrittmotoren betätigt, wobei jeder Schritt einer definierten Änderung des Filterwertes in der entsprechenden Farbe entspricht. Jedes Filter ist zudem mit einem Positions-schalter $(S_{wy,m,c})$ ausgestattet, der die Schaltinformazion $\underline{1}$ oder $\underline{0}$ liefert, je nachdem ob sich das Filter in Wirkstellung oder in Nullstellung außerhalb des Strahlenganges befindet.

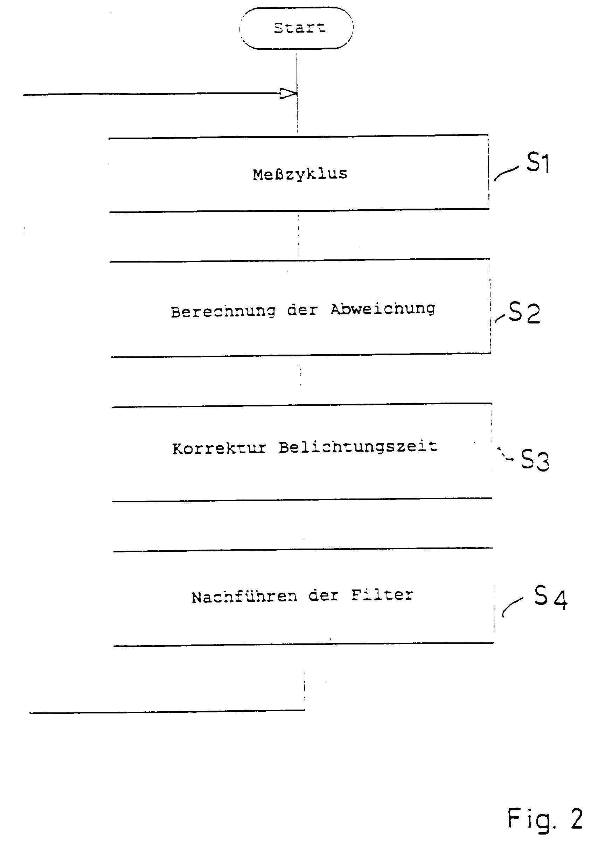

Figur 2 veranscnaulicht das Funktionsprinzip des geschlossenen Regelkreises gemäß der Erfindung. In einer Meßphase S1 werden mittels der Sensoren 13 die Ist-Werte der Lichtintensität in jeder Grundfarbe gemessen. In einer anschließenden Rechenphase S2 werden die Meßwerte nach digitaler Aufbereitung mit an einem Bedienpult eingestellten Soll-Werten verglichen, um aus einer festgestellten Abweichung hinsichtlich Neutraldichte einen Korrekturwert für die Belichtungszeit zu berechnen (S3) und aus einer Abweichung hinsichtlich Farbe eine Stellgröße für die Filternachführung herzuleiten (S4). Der vollständige Meß- und Regelzyklus wiederholt sich laufend, so daß eine ständige Regelung der Kopierlichtmenge auf vorgebbare Werte gewährleistet ist.

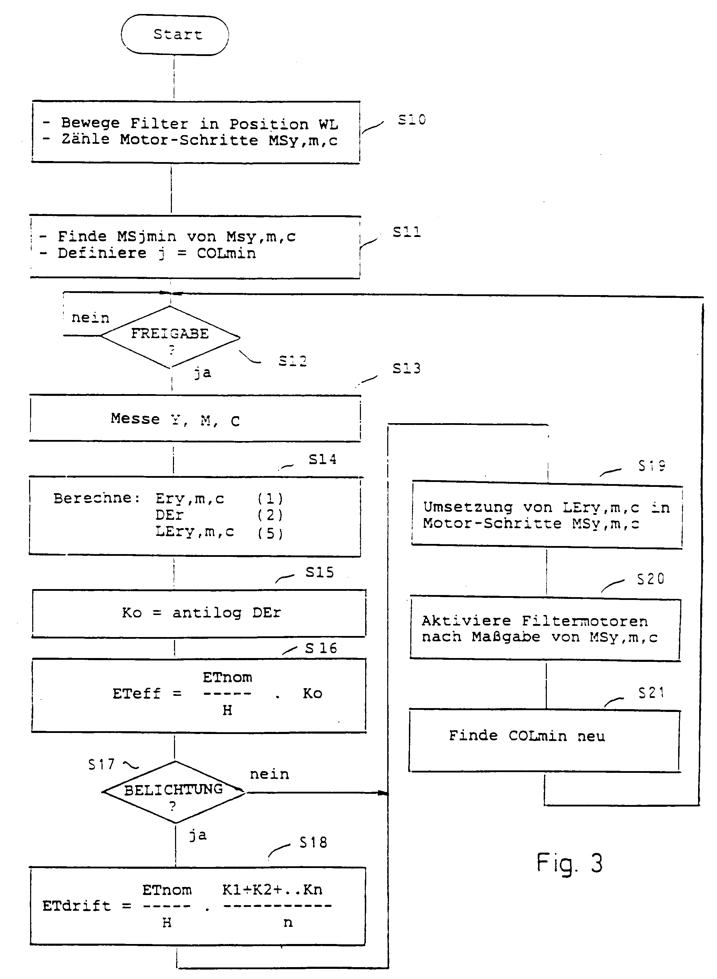

Figur 3 zeigt ein Flußdiagramm zur Veranschaulichung des Operationsablaufs der einzelnen Stufen Innerhalb des Regelkreises. Das Verfahren geht von der Voraussetzung aus, daß höchstens zwei der drei Farbfilter gleichzeitig im Strahlengang liegen sollen, weil ein von den drei Filtern gemeinsam abgedeckter Teilquerschnitt des Lichtbündels lediglich einen Helligkeitsverlust ohne Einfluß auf die Farbzusammensetzung ergeben würde. Diesem Umstand muß das Regelsystem Rechnung tragen, indem es unter den drei Farbkomponenten jene ermittelt, die anteilmäßig am schwächsten ist (im folgenden COLmin genannt). Zu diesem Zwecke werden in einer Voreinstellphase S10 die Stellmotoren der Filter 3, 4 und 5 aktiviert, um die Filter zunächst in die Weißlichtposition (WL) außerhalb des Strahlenbündels zu bewegen, wobei die dazu erforderlichen Motor-Schritte MSy,m,c für jedes Filter gezählt werden. Die Farbe des Filters mit der kleinsten Schrittzahl MSjmin (j = y,m oder c) wird als COLmin definiert (S11). Als COLmin wird also die Farbe jenes Filters definiert, das ursprünglich bereits in der Weißlichtposition war oder ihr im Vergleich zu den anderen am nächsten stand. Mit dem Einschalten des Projektionslichtes erfolgt im Schritt S12 die Freigabe für die Lichtmessung in der Lichtmischbox im nächsten Schritt S13, der dem Schritt S1 der Figur 2 entspricht. Die mittels der Sensoren 13 in den einzelnen Farben aufgenommenen Meßwerte werden im Mikroprozessorsystem softwaremäßig in logarithmische Werte umgesetzt, so daß das Meßergebnis in Form von Farbdichtewerten Y (yellow), M (magenta) und C (cyan) mit Bezug auf die subtraktiven Farbfilter vorliegt.

Es folgt ein Rechenschritt S14, der dem Schritt S2 der Figur 2 entspricht, in welchem aus dem Vergleich der gemessenen Werte Y, M, C mit am Bedienpult eingestellen Soll-Werten TVy,m,c Abweichungen Ery,m,c nach folgender Beziehung hergeleitet werden:

$$Ery = H + TVy - Y$$
$$Erm = H + TVm - M \qquad (1)$$
$$Erc = H + TVc - C$$

wobei H eine Konstante ist, die auf eine Eichung des Meßsystems bei Weißlicht unter Verwendung einer kalibrierten Testlampe bezogen ist.

Weitere Rechenschritte haben zum Zweck, aus der Abweichung Ery,m,c gesonderte Abweichungen hinsichtlich des Farbanteils und hinsichtlich des allen drei Farben gemeinsamen Helligkeitsanteils (Neutraldichte) herzuleiten. Die Neutraldichte-Abweichung (DEr) ist identisch mit jenem der drei Werte Ery, Erm oder Erc, welcher die bereits im vorhergehenden Schritt S11 als COLmin identifizierte Farbe betrifft, das heißt

$$DEr = Er(COLmin) \qquad (2)$$

Aus DEr wird im Schritt S15 ein Korrekturfaktor K gemäß

$$K\varnothing = antilog\ DEr \qquad (3)$$

und im weiteren Schritt S16 aus der vorgegebenen Nennbelichtungszeit (ETnom) eine effektive Belichtungszeit (ETeff) gemäß der Beziehung

$$ETeff = \frac{ETnom}{H} \cdot K\varnothing \qquad (4)$$

errechnet. Die effektive Belichtungszeit wird vorzugsweise sichtbar angezeigt, so daß bei Bedarf die Differenz zwischen der eingestellten Nennbelichtungszeit und der aktuellen effektiven Belichtungszeit festgestellt werden kann.

Für die Farbabweichung LEry,m,c hingegen gilt

$$LEry = Ery - DEr$$
$$LErm = Erm - DEr \qquad (5)$$
$$LErc = Erc - DEr$$

wobei einer der Werte Ery, Erm oder Erc gleich DEr und folglich einer der Werte LEry, LErm oder LErc gleich Null ist.

Im Schritt S19 werden die Werte LEry,m,c in Schrittzahlen MSy,m,c für die Filterantriebe umgesetzt und die Schrittmotoren nach Maßgabe der jeweiligen Anzahl Schritte aktiviert (S20). Dabei ist festzuhalten, daß das der Farbe COLmin entsprechende Filter von dieser Regelung ausgeschlossen bleibt. Die beiden anderen Filter werden hingegen nachgeregelt, bis jedes entweder die vorgeschriebene Anzahl Verstellschritte MS ausgeführt oder aber im Laufe der Verstellung seine Endpositon außerhalb des Strahlenquerschnitts erreicht hat, was durch die Schaltinformation 0 des entsprechenden Positionsschalters SC signalisiert wird.

Der anschließende Schritt S21 dient der Auffindung der nach der erfolgten Filtereinstellung im nächsten Regelzyklus als COLmin zu betrachtenden Farbe. Dazu wird der Schaltzustand der Positionsschalter SW1 und SW2 jener zwei Filter festgestellt, deren Farbe im gegenwärtigen Regelzyklus nicht COLmin sind. Befindet sich keines dieser Filter in der Endposition außerhalb des Strahlenganges, wird die geltende Farbe COLmin als solche beibehalten. Sind hingegen beide Filter in der Endposition, werden die Schrittzähler der den Filtern zugehörigen Filterantriebe abgelesen und als COLmin wird die Farbe jenes Filters definiert, dessen Zähler den höheren Zählwert aufweist. Befindet sich schließlich nur eines der beiden in Rede stehenden Farbfilter in Endstellung, wird die Farbe dieses Filters zur Farbe COLmin im nächsten Regelzyklus.

Der beschriebene Regelzyklus wiederholt sich ständig und der Ausgleich wird in sukzessiver Annäherung nach einer Anzahl von Zyklen erreicht, die von der Größe der anfänglichen Abweichung abhängt. Aus diesem Grunde wird In einem vorgegebenen Zeitabstand vom Auslösen des ersten Regelzyklus überprüft, ob die bestehende Filterabweichung LEry,m,c unterhalb einer festgesetzten Schwelle liegt. Wenn ja, wird die Belichtung freigegeben, andernfalls wird ein Fehlerhinweis ausgegeben.

Solange die Belichtungszeit noch nicht ausgelöst ist, wird der Wert von Ko aus (3) bei jedem Regelzyklus aufgrund des neuen Wertes von DEr aktualisiert. Ist hingegen die Belichtung im Gang, was in Schritt S17 der Figur 3 abgefragt wird, so wird die Belichtungszeit für die Dauer der Belichtung nach Maßgabe des Mittelwertes $\overline{Kn}$ der Korrekturfaktoren K1, K2 ... Kn aufeinanderfolgender Meßzyklen aktualisiert gemäß der Beziehung (S18):

$$ETdrift = \frac{ETnom}{H}\,\overline{Kn} \qquad (6)$$

mit

$$\overline{Kn} = \frac{K1 + K2 + ... Kn}{n} \qquad (7)$$

Aus der differenz zwischen ETdrift und der seit Beginn der Belichtung abgelaufenen Zeit $\underline{t}$ ergibt sich die gleitende Restbelichtungszeit

$$ETrest = ETdrif - \underset{\cdot}{t} \qquad (8)$$

Wird ETrest gleich Null (oder negativ), wird die Belichtung durch Schließen des Verschlusses 11 abgebrochen.

Um die Berechnung des Mittelwertes $\overline{Kn}$ gemäß (6) nach Hinzunahme eines weiteren Regelzyklus zu erleichtern, wird die Summe Sn = K1 + K2 + ..... Kn aus (6) bei bei jedem Zyklus zwischengespeichert und ein systeminterner Zähler bei jedem neuen Zyklus um eine Einheit inkrementiert.

**Patentansprüche**

1. Verfahren zur Regelung der Kopierlichtmenge in einem geschlossenen Regelkreis eines mit einer Farbfiltereinrichtung und einem Mikroprozessor ausgestatteten fotografischen Vergrößerungsgeräts, bestehend aus folgenden Schritten:

Messen des von verstellbaren Farbfiltern (3, 4, 5) beeinflußten Kopierlichts selektiv in den Grundfarben Rot, Grün und Blau zur Bestimmung von Istwerten der Lichtintensität (Y, M, C), Vergleichen der Istwerte mit vorgegebenen Sollwerten (TVy, m, c) zur Bestimmung einer resultierenden Abweichung (Ery, m, c), gekennzeichnet durch die weiteren Schritte:
Trennen der resultierenden Abweichung (Ery, m, c) in eine Farbabweichung (LEry, m, c) und eine Helligkeitsabweichung (DEr),
Ausgleichen der Farbabweichung (LEry, m, c) mittels Nachführung der Farhfilter (3, 4, 5) und Umsetzen der Helligkeitsabweichung (DEr) in einen Korrekturfaktor (K) für eine Soll-Belichtungszeit (ETnom), derart daß für jede Grundfarbe das Produkt aus den Istwerten der Lichtintensität (Y, M, C) und der korrigierten Belichtungszeit (ETeff) gleich dem Produkt aus dem Sollwert der Lichtintensität (TVy, m, c) und der Soll-Belichtungszeit (ETnom) ist;
und Steuerung der Belichtung entsprechend der korrigierten Belichtungszeit (ETeff).

2. Verfahren nach Anspruch 1, dadurch gekennzeichnet, daß die Regelung der Kopierlichtmenge in einzelnen, sich laufend wiederholenden Regelzyklen erfolgt.

3. Verfahren nach Anspruch 2, dadurch gekennzeichnet, daß die effektive Belichtungszeit (ETeff) während der Belichtung nach Maßgabe des Mittelwertes ($\overline{Kn}$) der Korrekturwerte (K1, K2 ... Kn) der aufeinanderfolgenden Regelzyklen laufend aktualisiert wird.

4. Verfahren nach Anspruch 3, dadurch gekennzeichnet, daß im Hinblick auf die Ausdehnung der Mittelwertbildung auf eine im vorhinein unbestimmte Anzahl von Regelzyklen bei jedem einzelnen Zyklus der Summenwert (Sn) der in die Mittelwertbildung eingehenden Glieder (K1, K2 ... Kn) gespeichert wird.

5. Vorrichtung zur Regelung der Kopierlichtmenge in einem geschlossenen Regelkreis eines fotografischen Vergrößerungsgeräts, mit Mitteln (6) zur Verstellung von Farbfiltern (3, 4, 5) einer Farbfiltereinrichtung, mit Mitteln (13) zum farbselektiven Messen des von den Farbfiltern (3, 4, 5) beeinflußten Kopierlichts, mit einem Mikroprozessorsystem (15) mit

Eingängen (14, 16) für die Meßwerte der Lichtmeßmittel (13),
Ausgängen (16) zum Verstellen der Farbfilter, einer Eingabeeinheit (20) zur Eingabe von Sollwerten für Farbe (TVy, m, c) und Belichtungszeit (ETnom),
Speichermitteln (19) zum Speichern der eingegebenen Sollwerte sowie Mitteln zum Steuern der Belichtungszeit durch das Mikroprozessorsystem (15), dadurch gekennzeichnet, daß das Mikroprozessorsystem (15) dazu ausgelegt ist, durch Vergleich von eingestellten Sollwerten und gemessenen Istwerten getrennte Abweichungen für Farbe (LEry, m, c) und Helligkeit (DEr) zu errechnen, um in Abhängigkeit der Farbabweichung (LEry, m, c) Stellgrößen (MSy, m, c) für die Farbfilter und in Abhängigkeit der Helligkeitsabweichung (DEr) einen Korrekturfaktor (K) für die vorgegebene Soll-Belichtungszeit (ETnom) zu ermitteln, derart daß für jede Grundfarbe das Produkt aus den Istwerten der Lichtintensität (Y, M, C) und der korrigierten Belichtungszeit (ETeff) gleich dem Produkt aus dem Sollwert der Lichtintensität (TVy, m, c) und der Soll-Belichtungszeit (ETnom) ist.

6. Regelvorrichtung nach Anspruch 5, dadurch gekennzeichnet, daß die einzelnen Filter (3, 4, 5) der Filtereinrichtung von Schrittmotoren angetrieben und über das Mikroprozessorsystem (15) gesteuert werden, derart, daß die Abweichung hinsichtlich einer Farbe (LEry,m,c) in entsprechende Anzahl Motor-Schritte des betreffenden Filters umgesetzt wird.

7. Vorrichtung nach Anspruch 5, dadurch gekennzeichnet, daß das Mikroprozessorsystem (15) ausgelegt ist, um aus in aufeinanderfolgenden Regelzyklen ermittelten Korrekturfaktoren (K1, K2 ... Kn) den Mittelwert ($\overline{Kn}$) zu bilden und bei jedem Zyklus die Nennbelichtungszeit nach Maßgabe des aktualisierten Mittelwertes ($\overline{Kn}$) zu korrigieren.

8. Vorrichtung nach Anspruch 7, dadurch gekennzeichnet, daß das Mikroprozessorsystem (15) den Summenwert (Sn) der in die Mittelwertbildung eingehenden Glieder (K1, K2 ... Kn) des laufenden und der vorhergehenden Zyklen bis zum nächstfolgendem Zyklus zwischenspeichert.

## Claims

1. Method for controlling the amount of printing light in a closed-loop control circuit of a photographic enlarger, provided with a colour-filter device and a microprocessor, comprising the following steps:

   selectively measuring the printing light influenced by the adjustable colour filters (3, 4, 5) in the primary colours red, green and blue for determining actual values of light intensity (Y, M, C),

   comparing the actual values with predetermined desired values (TVy, m, c) for determining a resulting deviation (Ery, m, c), characterized by the further steps:

   separating the resulting deviation (Ery, m, c) into a chromatism (LEry, m, c) and a brightness deviation (DEr), compensating the chromatism (LEry, m, c) by correcting the colour filters (3, 4, 5) and

   converting the brightness deviation (DEr) into a correction factor (K) for a desired exposure time (ETnom) in such a manner that for each primary colour the product of the actual values of light intensity (Y, M, C) and the corrected exposure time (ETeff) is equal to the product of the desired value of light intensity (TVy, m, c) and the desired exposure time (ETnom); and control of the exposure according to the corrected exposure time (ETeff).

2. Method according to Claim 1, characterized in that the control of the amount of printing light is carried out in single, constantly recurring control cycles.

3. Method according to Claim 2, characterized in that the effective exposure time (ETeff) is constantly updated during exposure in accordance with the mean value ($\overline{Kn}$) of the correction values (K1, K2 ... Kn) of the successive control cycles.

4. Method according to Claim 3, characterized in that with regard to the expansion of mean value formation to a number of control cycles which is undetermined from the start, the sum value (Sn) of the terms (K1, K2 ... Kn) entering the mean value formation is stored in each individual cycle.

5. Apparatus for controlling the amount of printing light in a closed-loop control circuit of a photographic enlarger, having means (6) for adjusting colour filters (3, 4, 5) in a colour-filter device, having means (13) for the colour-selective measurement of the printing light influenced by the colour filters (3, 4, 5), having a microprocessor system (15) with inputs (14, 16) for the measured values of the light-measuring means (13), outputs (16) for adjusting the colour filters, an input unit (20) for inputting desired values for colour (TVy, m, c) and exposure time (ETnom), storage means (19) for storing the input desired values as well as means for controlling the exposure time by the microprocessor system (15), characterized in that the microprocessor system (15) is designed for the purpose of computing, by comparing set desired values and measured actual values, separate deviations for colour (LEry, m, c) and brightness (DEr) in order to determine, as a function of the chromatism (LEry, m, c), control variables (MSy, m, c) for the coluor filters and, as a function of the brightness deviation (DEr), a correction factor (K) for the predetermined desired exposure time (ETnom) in such a manner that for each primary colour the product of the actual values of light intensity (Y, M, C) and corrected exposure time (ETeff) is equal to the product of the desired value of light intensity (TVy, m, c) and the desired exposure time (ETnom).

6. Control apparatus according to Claim 1, characterized in that the individual filters (3, 4, 5) of the filter device are driven by stepping motors and controlled by means of the microprocessor system (15), in such a manner that the deviation in terms of one colour (LEry, m, c) is converted into a corresponding number of motor steps of the relevant filter.

7. Apparatus according to Claim 5, characterized in that the microprocessor system (15) is designed to form the mean value ($\overline{Kn}$) from correction factors (K1, K2 ... Kn) determined in successive control cycles and to correct, in each cycle, the nominal exposure time in accordance with the updated mean value ($\overline{Kn}$).

8. Apparatus according to Claim 7, characterized in that the microprocessor system (15) temporarily stores the sum value (Sn) of the terms (K1, K2 ... Kn), entering the mean value formation, of the current and the preceding cycles until the next cycle.

## Revendications

1. Procédé de réglage de la quantité de lumière de tirage dans un circuit de réglage en boucle fermée, appartenant à un agrandisseur photographique équipé d'un dispositif de filtres colorés et d'un microprocesseur, ce procédé étant composé des phases suivantes :

   mesure de la lumière de tirage influencée par des filtres colorés réglables (3, 4, 5), exécutée dans les couleurs de base, le rouge, le vert et le bleu, pour la détermination des valeurs réelles de l'intensité lumineuse (Y, M, C),
   comparaison des valeurs réelles avec des valeurs de consigne prédéterminées (TVy, m, c) pour la détermination d'un écart résultant (Ery, m, c), caractérisé par les phases additionnelles suivantes :
   décomposition de l'écart résultant (Ery, m, c) en un écart chromatique (LEry, m, c) et un écart de luminosité (DEr,),
   compensation de l'écart chromatique (LEry, m, c) au moyen d'une correction des filtres colorés (3, 4, 5) et
   conversion de l'écart de luminosité (DEr) en un facteur de correction (K) pour un temps d'exposition de consigne (ETnom) de manière que, pour chaque couleur de base, le produit des valeurs réelles de l'intensité lumineuse (Y, M, C) et du temps d'exposition corrigé (ETeff) soit égal au produit de la valeur de consigne de l'intensité lumineuse (TVy, m, c) par le temps d'exposition de consigne (ETnom) et commande de l'exposition conformément au temps d'exposition corrigé (ETeff).

2. Procédé selon la revendication 1, caractérisé en ce que la réglage de la quantité de lumière de tirage s'effectue par cycles de réglage qui se répètent continuellement.

3. Procédé selon la revendication 2, caractérisé en ce que le temps d'exposition effectif (ETeff) est continuellement actualisé pendant l'exposition en fonction de la valeur moyenne ($\overline{Kn}$) des valeurs de correction (K1, K2, ... Kn) des cycles de réglage successifs.

4. Procédé selon la revendication 3 caractérisé en ce que, pour étendre le calcul de la valeur moyenne à un nombre indéterminé à priori de cycles de réglage, la somme (Sn) des termes (K1, K2, ... Kn) intervenant dans la formation de la moyenne est mémorisée à chaque cycle.

5. Dispositif de réglage de la quantité de lumière de tirage dans un circuit de réglage en boucle fermée appartenant à un agrandisseur photographique, comprenant des moyens (6) pour le déplacement des filtres colorés (3, 4, 5) d'un dispositif de filtres colorés, des moyens (13) pour la mesure sélective chromatique de la lumière de tirage influencée par les filtres colorés (3, 4, 5), un système à microprocesseur (15) possédant des entrées (14, 16) pour les valeurs mesurées des moyens de mesure de la lumière (13), des sorties (16) servant au réglage de position des filtres colorés, une unité d'entrée (20) servant à entrer des valeurs de consigne pour les couleurs (TVy, m, c) et le temps d'exposition (ETnom), des moyens de mémoire (19) pour mémoriser les valeurs de consigne d'entrée, ainsi que des moyens pour la commande du temps d'exposition par le système à microprocesseur (15), caractérisé en ce que le système à microprocesseur (15) est construit de manière à calculer, par comparaison de valeurs de consigne réglées et de valeurs réelles mesurées, des écarts distincts pour les couleurs (LEry, m, c) et la luminosité (DEr), afin de trouver des grandeurs de réglage (MSy, m, c) pour les filtres colorés en fonction de l'écart chromatique (LEry, m, c) et un facteur de correction (K) pour le temps d'exposition de consigne (ETnom) prédéterminé en fonction de l'écart de luminosité (DEr), de manière que, pour chaque couleur de base, le produit des valeurs réelles de l'intensité lumineuse (Y, M, C) par le temps d'exposition corrigé (ETeff) soit égal au produit de la valeur de consigne de l'intensité lumineuse (TVy, m, c) par le temps d'exposition de consigne (ETnom).

6. Dispositif de réglage selon la revendication 5, caractérisé en ce que les filtres (3, 4, 5) du dispositif de filtres sont entraînés par des moteurs pas-à-pas et commandés par l'intermédiaire du dispositif à microprocesseur (15) de manière que l'écart pour une couleur (LEry, m, c) soit converti en un nombre correspondant de pas du moteur du filtre considéré.

7. Dispositif selon la revendication 5, caractérisé en ce que le système à microprocesseur (15) est construit pour former la valeur moyenne ($\overline{Kn}$) à partir des facteurs de correction (K1, K2, **...,** Kn) calculés dans des cycles de réglage successifs et corriger le temps d'exposition nominal à chaque cycle en fonction de la moyenne ($\overline{Kn}$) actualisée.

8. Dispositif selon la revendication 7, caractérisé en ce que le système à microprocesseur (15) mémorise en mémorisation intermédiaire, la somme (Sn) des termes (K1, K2, ..., Kn) du cycle courant et des cycles précédents qui interviennent dans la formation de la moyenne, jusqu'au cycle suivant.

Fig. 1

Start

Meßzyklus /S1

Berechnung der Abweichung /S2

Korrektur Belichtungszeit -S3

Nachführen der Filter /S4

Fig. 2

```
                    ┌─────────┐
                    │  Start  │
                    └─────────┘
                         │
   ┌─────────────────────────────────────┐
   │ - Bewege Filter in Position WL       │ ⟍ S10
   │ - Zähle Motor-Schritte MSy,m,c       │
   └─────────────────────────────────────┘
                         │
   ┌─────────────────────────────────────┐
   │ - Finde MSjmin von Msy,m,c           │ ⟍ S11
   │ - Definiere j = COLmin               │
   └─────────────────────────────────────┘
                         │
   nein         ◇─────────────◇
  ─────────────◇  FREIGABE     ◇
               ◇      ?        ◇ ⟍ S12        ⟍ S13
                    ja
   ┌─────────────────────────────────────┐
   │           Messe Y, M, C             │
   └─────────────────────────────────────┘
                         │                            ⟋ S19
                      ⟋ S14           ┌─────────────────────────────┐
   ┌──────────────────────────┐       │ Umsetzung von LEry,m,c in    │
   │ Berechne: Ery,m,c   (1)  │       │ Motor-Schritte MSy,m,c       │
   │           DEr       (2)  │       └─────────────────────────────┘
   │           LEry,m,c  (5)  │                      │
   └──────────────────────────┘                   ⟋ S20
                      ⟋ S15           ┌─────────────────────────────┐
   ┌──────────────────────────┐       │ Aktiviere Filtermotoren      │
   │     Ko = antilog DEr     │       │ nach Maßgabe von MSy,m,c     │
   └──────────────────────────┘       └─────────────────────────────┘
                    ⟋ S 16                         │
   ┌──────────────────────────┐                 ⟋ S21
   │           ETnom          │       ┌─────────────────────────────┐
   │ ETeff = ─────── . Ko     │       │     Finde COLmin neu         │
   │            H             │       └─────────────────────────────┘
   └──────────────────────────┘
```

$$ETeff = \frac{ETnom}{H} \cdot Ko$$

```
  S17 ⟍      ◇─────────────◇        nein
            ◇ BELICHTUNG    ◇ ──────────────
            ◇     ?         ◇
                 ja
                      ⟋ S18
```

$$ETdrift = \frac{ETnom}{H} \cdot \frac{K1+K2+..Kn}{n}$$

## Fig. 3